# EUROPÄISCHE PATENTANMELDUNG

(11) **EP 2 457 688 A1**
(43) Veröffentlichungstag der Anmeldung: **30.05.2012**
(21) Anmeldenummer: 11075054.4
(22) Anmeldetag: 24.03.2011
(51) Int. Cl.: B23Q 17/00

(54) **Verfahren zur Werkstück-Positionierung und -Fixierung**

(30) Priorität: 25.11.2010 DE 102010052676
(71) Anmelder: HOHENSTEIN Vorrichtungsbau und Spannsysteme GmbH, 09337 Hohenstein-Ernstthal (DE)
(72) Erfinder: Franzki, Michael, 09337 Hohenstein-Er. (DE)
(74) Vertreter: Grosse, Ulrich

(57) **Zusammenfassung**

1.
Verfahren zur Werkstück-Positionierung und -Fixierung
2.
Durch wechselweise aufeinander folgende mittels sensorischen und mittels mechanischen Funktionskomponenten realisierbare Verfahrensschritte sind spanend zu fertigende Werkstücke, vor dem Start der Werkzeugspindel, in Spannvorrichtungen oder auf Werkstückträgern lage- und wiederholgenau zu positionieren sowie fest und sicher zu fixieren.
Mittels eines mobilen Computers überwacht und steuert der Fertigungslenker über Schaltungsinformationen und Steuerimpulse von der Spannvorrichtung aus, nacheinander alle zehn Verfahrensschritte des Verfahrens
3.
Die Verfahrensanwendung erfolgt vor und nach der spanenden Fertigung von Werkstücken, insbesondere durch Bohren und Fräsen auf Werkzeugmaschinen und der Entnahme des Werkstückes aus der Spannvorrichtung und vom Werkstückträger

## Beschreibung

### Patentbeschreibunct

Die Erfindung geht von dem im Oberbegriff des Patentanspruches 1 definierten Verfahren zur Werkstück-Positionierung und -Fixierung, zusammenfassend auch Werkstückspannung genannt, aus.

Nach DIN 6300:2009-04 sind die Fertigungs- oder Arbeitsmittel mit denen beispielsweise prismatische oder gehäuseförmige Werkstücke während eines formändemden Fertigungsverfahrens, zum Beispiel während des Bohrens oder des Fräsens in einer bestimmten Lage, zum Werkzeug gerichtet, fixiert sind, mit der Bezeichnung Vorrichtungen definiert. Zu den in dieser Norm benannten Arten der Spannkrafterzeugung gehören die Hydraulik-Druckölspannung und die Pneumatik-Druckluftspannung.

Als Aufgabe benennt die Norm, dass die Werkstücke in den Vorrichtungen, als Spannvorrichtungen genutzt, wiederholgenau positioniert und gespannt sind.

Die Ausbildung von Werkstückträgern mit positioniert und fixiert aufliegenden Werkstücken wird mit den nach DIN 55201 Teil 1:1985-09 und DIN 55201 Teil 2:1987-12 genormten Paletten für Werkzeugmaschinen realisiert.

Das Verfahren zur Positionierung und Fixierung von Werkstücken auf diesen Fertigungs- und Arbeitsmitteln an den spanenden Werkzeugen von Werkzeugmaschinen wird dabei in der Werkstatt-Praxis aber nur als ein komplexes Verfahren zur Spannung von Werkstücken, als ein Vorbereitungs- und Rüstverfahren für das eigentlich durchzuführende formändernde Fertigungsverfahren verstanden und entsprechend vorbereitet und realisiert. Ein bedienarmer mit hoher Qualität und Arbeitssicherheit durchgeführter industrieller Fertigungsprozess erfordert aber eine detaillierte innovative Verfahrensstruktur auch für die Werkstückspannung.

Stand der Technik ist es, das komplexe Verfahren der Positionierung und Fixierung der Werkstücke in Spannvorrichtungen und auf Werkstückträgern in einzelne Verfahrensschritte aufzuteilen, um diese besser bedienarm mit hoher Qualität und Arbeitssicherheit durchführen zu können. Dabei sind in der Regel werkstückabhängig nur einzelne spezifische Verfahrensschritte durch innovative Ausbildungen von Zuführ-, Positionier- und Fixierkomponenten in Spannvorrichtungen weiterentwickelt und erfinderisch ausgebildet worden.

Beispielhaft betrifft dies die nachstehend benannten Einzel-Verfahrensschritte des Gesamtverfahrens der Positionierung und Fixierung der Werkstücke im Rahmen der komplexen Werkstückspannung vor Beginn der spanenden Fertigung auf Bohr- und Fräsmaschinen.

Im Einzelnen sind das:
- die Aneinanderreihung der Verfahrensschritte Zuführung, Lagebestimmung, Fixierung und Förderung von Werkstücken sind beispielsweise Gegenstand von DE 100 13 975 C2 und DE 102008 031 487 A1
- die Aneinanderreihung der Verfahrensschritte Feststellung der Nichtanwesenheit von Restspänen, Zuführung der Werkstücke, Feststellung des zugeführten Werkstückes ist in DE 102 05 553 U1 beschrieben
- die Verbindung der Lagebestimmung von Werkstücken durch Auflegen mit einer Auflagekontrolle ist beispielhaft Gegenstand von DE 102009 002164 U1 und CH 486 290
- die Zusammenführung der Verfahrensschritte Fixieren der Werkstücke mittels Spannkomponenten und einer Kontrolle des gespannten Zustandes, die in DE 102008 004 648 A1 und in DE 112006 000238 B4 beschrieben sind und als Beispiel für den Verfahrensschritt
- Startinformationsimpuls an die Werkzeugmaschinensteuerung ist DE 102008 023 224 A1 zu nennen

Nachteilig ist bei diesen Beispielen die fehlende Komplexität und Durchgängigkeit der einzelnen Verfahrensschritte und zugehörigen Funktionskomponenten. Das Gesamtverfahren, welches sich aus zehn Verfahrensschritten zusammensetzt, ist in seiner Komplexität nicht Gegenstand von Lösungen des Standes der Technik.

Nachteilig ist weiterhin, dass sich nicht nur bei den hier beispielhaft benannten erfinderischen Lösungen sondern auch in der Werkstatt-Praxis die innovativen Verfahrensausbildungen
- auf mit mechanischen Funktionskomponenten realisierbare Verfahrensschritte und
- auf eine Koppelung von nur jeweils einem Verfahrensschritt der mittels mechanischen
Funktionskomponente mit einem, diesen in der technologischen Ablauffolge vorausgehenden oder nachfolgenden Verfahrensschritt der mittels sensorischer Funktionskomponente durchführbar ist konzentriert sind.

Der im Patentanspruch 1 angegebenen Erfindung liegt das Problem zugrunde, das Verfahren zur Werkstück-Positionierung und -Fixierung so intelligent auszubilden, dass
- durch eine vollständige und richtige Ablauffolge aller Verfahrensschritte ein optimierter Verfahrensablauf bedienarm durchführbar ist und
- die spanend zu fertigenden Werkstücke von Fertigungsbeginn lage- und wiederholgenau positionier- sowie fest und sicher fixierbar sind.

Das Problem wird durch den Patentanspruch 1 wie folgt gelöst:
Das vorgeschlagene Verfahren zur Werkstück-Positionierung und -Fixierung in Spannvorrichtungen oder auf Werkstück-Trägern ist so konzipiert, dass vor und nach der spanenden Fertigung der Werkstücke auf Bohr- und Fräsmaschinen eine zweckmäßige Ablauffolge von Verfahrensschritten realisiert wird in dem vor, zwischen und nach jedem mittels mechanischen Funktionskomponenten realisierbaren Verfahrensschritt je ein mittels sensorischer Funktionskomponenten realisierbarer Verfahrensschritt eingeordnet ist.

Damit läuft das Verfahren zur Werkstück-Positionierung und -Fixierung mit folgender Reihung der Verfahrensschritte (VS) ab:
- VS 1: beinhaltet die Feststellung der Nichtanwesenheit von vorher gefertigten und entspannten Werkstücken sowie Restspänen
- VS 2: beinhaltet die Ableitung noch vorher gefertigter Werkstücke sowie das Zuführen oder Einlegen des nachfolgend zu fertigenden Werkstückes
- VS 3: beinhaltet die Feststellung des zugeführten Werkstückes und
- VS 4: die Lagebestimmung dieses Werkstückes durch Auf- und Anlegen, wobei im
- VS 5: die erreichte richtige Werkstückposition an den Werkstückauf- und anlagen festgestellt wird
- VS 6: beinhaltet das Fixieren dieses Werkstückes mit entsprechend von den Spannkomponenten ausgeübten Festhaltekräften in der Spannvorrichtung oder auf dem Werkstückträger, im
- VS 7: wird die feste und sichere Werkstückfixierung sowie das Vorhandensein auf das Werkstück wirkender Festhaltekräfte festgestellt

- VS 8: beinhaltet das Fördern von der ursprünglichen Werkstückwechselstellung in die Fertigungsstellung am Werkzeug, wobei die Spannvorrichtung oder der Werkstückträger in dieser Stellung fixiert wird, wobei mit dem
- VS 9: die Richtigkeit dieser Position und die Wirksamkeit dieser Fixierung festgestellt wird und in
- VS 10: daraus abgeleitet, der Startinformationsimpuls an die Werkzeugmaschinensteuerung erfolgt

Diese Ablauffolge der Verfahrensschritte wird von einem Fertigungslenker mittels eines mobilen Computers durch Schaltungs- und Steuerimpulse manuell oder über Verfahrensablaufprogramme kontrolliert und gesteuert.

Weitere Ausgestaltungen der Erfindung sind in den Patentansprüchen 2 bis 5 angegeben. Sie betreffen im Einzelnen:
- eine Beschreibung der kennzeichnenden Merkmale der Verfahrensschritte VS 5, VS 7 und VS 10 auf der Grundlage der in den Verfahrensablauf einbezogenen sensorischen Funktionskomponenten für diese Verfahrensschritte
- der Ablauf der Steuerung und die auf der Übertragung der Ergebnisinformationen zwischen mobilen Computer und Werkzeugmaschinensteuerung bei den mit sensorischen Funktionskomponenten realisierbaren Verfahrensschritten
- die Anordnung der Elektroenergieversorgung sowie die Bereitstellung von Drucköl und Stauluft als Leistungsmedien für die Durchführung von Verfahrensschritten

Durch die in den Patentansprüchen benannten Merkmale werden die benannten Nachteile des Standes der Technik überwunden und die als Aufgabenstellung benannten Probleme gelöst.

## Patentansprüche

1. Verfahren zur Werkstück-Positionierung und -Fixierung in Spannvorrichtungen oder auf Werkstück-Trägern , bestehend aus einer Ablauffolge von Verfahrensschritten (VS), die vor Beginn der spanenden Fertigung von Werkstücken auf Bohr- und Fräsmaschinen durchzuführen sind, **dadurch gekennzeichnet,**
**dass** vor, zwischen und nach jeden der mittels mechanischer Funktionskomponenten realisierbaren Verfahrensschritte
VS 2 Ableitung vorher gefertigter Werkstücke, sowie Zuführen oder Einlegen des nachfolgend zu fertigenden Werkstückes,
VS 4 Lagebestimmung des Werkstückes durch Auf- und Anlegen sowie
VS 6 Fixieren des Werkstückes mit Festhaltekräften in der Spannvorrichtung oder auf dem Werkstückträger
VS 8 Fördern von der Werkstückwechselstellung in die Fertigungsstellung und Fixierung in dieser Stellung am spanenden Werkzeug, die mittels sensorischen Funktionselementen realisierbaren Verfahrensschritte
VS 1 Feststellung der Nichtanwesenheit von vorher gefertigten und entspannten Werkstücken sowie von Restspänen,
VS 3 Festtellung des zugeführten Werkstückes,
VS 5 Feststellung der erreichten Werkstückposition an den Werkstückauf- und anlagen
VS 7 Feststellung der festen und der sicheren Werkstück-Fixierung sowie von vorhandenen auf das Werkstück wirkenden Festhaltekräften
VS 9 Feststellung der durch die Spannvorrichtung-oder durch den Werkstückträger mit dem fixierten Werkstück erreichten Position in der Fertigstellung, sowie deren Fixierung in dieser Position und des damit in
VS 10 ausgelösten Startinformationsimpuls an die Werkzeugmaschinensteuerung angeordnet und
vom Fertigungslenker mittels einem mobilen Computer, von der Spannvorrichtung aus, durch Schaltungs- und Steuerimpulse manuell oder über Verfahrensablaufprogramme kontrollier- und steuerbar sind.

2. Verfahrens zur Werkstück-Positionierung und -Fixierung nach Patentanspruch 1, **dadurch gekennzeichnet, dass** im
VS 5 eine Auflagekontrolle zur Feststellung des vorhandenen und in richtiger wiederholgenauer Position auf- und anliegenden Werkstückes mittels elektronischer Sensoren erfolgt, die über die Leitungsverbindungen der Sensoren mit einem Informationsverarbeitungsmodul und durch optisch angezeigte Ja-/Nein-Signale von allen gemeinsam oder von jedem einzelnen der Sensoren mittels optische Signalkomponenten realisierbar und im
VS 7 die jeweilige hydraulische oder pneumatische Werkstückspannung über durch elektrische, für mehrere aneinander angrenzende Druckbereiche, angesteuerte Ventile eine einstellbare Größenordnung des Druckes der Leistungsmedien Drucköl oder Druckluft an den die Spannkraft auslösenden Spannkomponenten der Spannvorrichtung realisierbar und durch wiederholte Auflagekontrollen nach VS 5 korrigierbar und kontrollierbar sind und im VS10 die Startinformation an die Werkzeugmaschinensteuerung für den Fertigungsbeginn bei Ja-Signalen an allen sensorischen Werkstückauflagen, Messstellen an den Spannkomponenten und Messstellen an verformungsgefährdeten Werkstück-Strukturausbildungen über eine elektromagnetische Ventilschließung einer Stauluftleitung auslösbar ist.

3. Verfahren zur Werkstück-Positionierung und Fixierung nach Patentanspruch 1 und 2 **dadurch gekennzeichnet,**
**dass** die Steuerung der Verfahrensschritte und die Übertragung der festgestellten ErgebnisInformationen sowie der Ja-/Nein-Signale zwischen einem mobilen Computer und den mechanischen sowie sensorischen Funktionskomponenten einerseits und der Werkzeugmaschinensteuerung andererseits über ein Informationsverarbeitungsmodul, wahlweise über Funkwellen kabellos oder über Steuerungskabel erfolgt.

4. Verfahren zur Werkstück-Positionierung und -Fixierung nach Patentanspruch 1 und 2, **dadurch gekennzeichnet,**
**dass** alle Verfahrensschritte über eine vorrichtungsinterne Werkzeugmaschinenunabhängige autarke Elektroenergieversorgung und Druckölbereitstellung steuer- und realisierbar sind.

5. Verfahren zur Werkstück-Positionierung und -Fixierung nach Patentanspruch 1 bis 4, **dadurch gekennzeichnet,**
**dass** die Verfahrensschritte, zu deren Informationsgewinn Stauluft benötigt wird, über eine Leitungsverbindung mit der Werkzeugmaschinensteuerung steuer- und realisierbar sind.
